# DEMANDE DE BREVET EUROPEEN

(11) **EP 2 945 008 A1**
(43) Date de publication de la demande: **18.11.2015**
(21) Numéro de dépôt: 15167499.1
(22) Date de dépôt: 13.05.2015
(51) Int. Cl.: G02C 5/14, G02C 5/22

(54) **DISPOSITIF DE JONCTION DES BRANCHES SUR LE CADRE D'UNE PAIRE DE LUNETTES**

(30) Priorité: 13.05.2014 FR 1454253
(71) Demandeur: Immodev, 63400 Chamalieres (FR)
(72) Inventeur: Askar, Aly, 03800 Gannat (FR)
(74) Mandataire: Grand, Guillaume

(57) **Abrégé**

Dans ce dispositif de jonction, chaque branche (2) est munie fixement, à son extrémité, d'un logement (11) de réception d'un premier aimant (4) et le cadre (1) est muni fixement, de part et d'autre, d'un logement (7) de réception d'un second aimant (3). Les premiers et seconds aimants (3, 4), le logement (11) de chaque branche (2) et les logements (7) du cadre (1) constituent des moyens de liaison articulée et de maintien des branches (2) sur le cadre (1), conçus pour que le premier aimant (4) de chaque branche est partiellement reçu dans un espace libre du logement correspondant (7) du cadre, en venant, lors du repliement de la branche sur le cadre, s'engager dans une rainure (9) du cadre de manière qu'une arête interne de ce premier aimant et cette rainure constituent une articulation de la branche par rapport au cadre.

## Description

La présente invention concerne un dispositif de jonction des branches sur le cadre d'une paire de lunettes.

Le secteur technique de la présente invention est ainsi celui des lunettes de vue et en particulier des moyens de liaison entre les branches et le cadre de ces lunettes.

Les moyens de liaison entre les branches des lunettes par rapport au cadre sont largement connus. On connaît des articulations fixes ou indépendantes. On entend par articulations indépendantes des charnières qui ne comportent aucune fixation rigide entre la branche et le cadre.

Ainsi le brevet JP-H-11119166 décrit une charnière mécanique intégrant des aimants, permettant le pivotement de la branche par rapport au cadre. Il s'agit dans ce document uniquement de faciliter la fixation et le détachement de l'axe de la branche.

On connaît également le brevet EP-A-0522594 qui décrit des lunettes dont les branches sont fixées au cadre par une charnière, des aimants étant disposés au niveau des branches et du cadre pour assurer une retenue magnétique lorsque les branches sont repliées.

JP-S-56 10612 propose d'articuler les branches sur un cadre d'une paire de lunettes en faisant coopérer, par complémentarité de formes, l'extrémité massive de chaque branche, conformée en portion de cylindre, et une cavité cylindrique, creusée dans la masse d'une paroi ad hoc du cadre. Des éléments sont noyés en totalité dans la masse de l'extrémité de chaque branche et dans la masse de la paroi précitée du cadre, ces éléments étant potentiellement des aimants, sans avoir de certitude du fait que ce document n'est disponible qu'en langue japonaise.

US-A-2009/197547 propose, quant à lui, des lunettes dont les branches sont articulés de manière mécanique sur le cadre. Dans ce document, chaque branche est portée de manière amovible, grâce à des aimants, par un embout dédié qui est relié au cadre par une charnière mécanique.

Enfin, WO-A-2009/113187, sur lequel est basé le préambule de la revendication 1, divulgue une paire de lunettes dont chaque branche est jointe au cadre par des aimants, qui sont respectivement reçus dans un logement fixe de la branche et dans un logement fixe du cadre et qui sont chacun en affleurement du débouché de leur logement : par appui l'un contre l'autre de ces débouchés, les aimants se plaquent directement l'un contre l'autre, ce qui fige la branche en position par rapport au cadre, sans toutefois permettre son maintien articulé lors de son repliement.

Le but de la présente invention est de proposer un dispositif de jonction magnétique amélioré, en particulier qui permet, de manière pratique et efficace, de replier et déplier les branches par rapport au cadre des lunettes.

A cet effet, l'invention a pour objet un dispositif de jonction des branches sur le cadre d'une paire de lunettes, tel que défini à la revendication 1.

Des caractéristiques additionnelles avantageuses du dispositif conforme à l'invention sont spécifiées aux revendications dépendantes.

Un tout premier avantage de la présente invention réside dans l'absence de charnière entre les branches et le cadre, ce qui supprime toutes les possibilités de rupture.

Un autre avantage réside dans les branches sont assemblées dès qu'on les approche du cadre.

Un autre avantage encore de l'invention réside dans l'interchangeabilité des branches par rapport au cadre offrant ainsi une variabilité d'aspect et de confort tant pour le porteur de lunettes que pour l'opticien.

Un autre avantage encore de l'invention réside dans la rapidité d'assemblage des lunettes.

Un autre avantage encore de l'invention réside dans l'ajustement et le maintien des lunettes de manière ergonomique pour chaque utilisateur.

Un autre avantage encore de l'invention réside dans l'absence totale d'usure de la charnière, ce qui supprime tout besoin de service après-vente auprès de l'opticien.

Un autre avantage encore de l'invention réside dans la possibilité de fixer des options optiques, telles qu'un masque solaire, des verres pour la vision de nuit ou encore un masque pour la pratique sportive.

Un autre avantage encore de l'invention réside dans la possibilité de fixer des accessoires de mode, tels qu'un protège-oreilles, un piercing, un strass ou un bijou.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue éclatée d'une paire de lunettes,
- la figure 2 représente une vue du cadre de la paire de lunettes,
- la figure 3 représente une vue d'un premier mode de réalisation d'une branche de la paire de lunettes,
- la figure 4 représente un second mode de réalisation d'une branche de la paire de lunettes,
- la figure 5 est une coupe montrant la jonction entre la branche et le cadre,
- la figure 6 représente une vue du cadre et des branches de la paire de lunettes,
- la figure 7 représente la position repliée des branches sur le cadre,
- la figure 8 est une vue montrant un détail de réalisation du second mode de réalisation, et
- la figure 9 est une vue montrant un détail de réalisation du premier mode de réalisation.

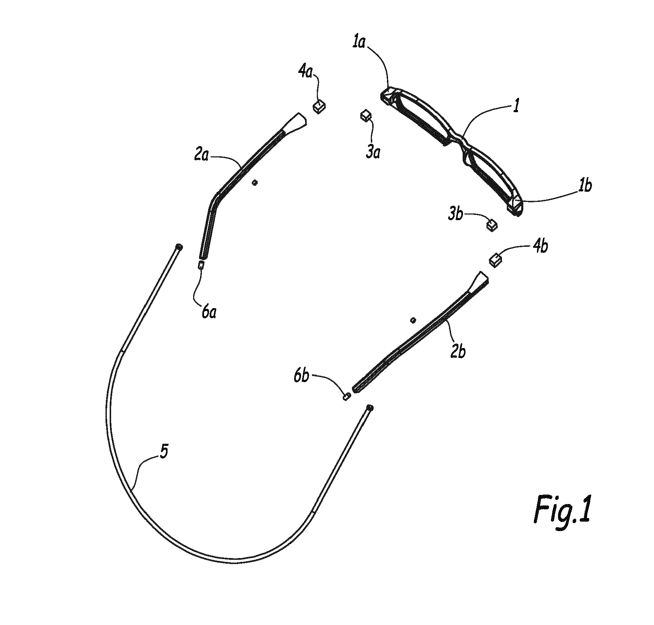

La paire de lunettes représentée sur la figure 1 comprend un cadre 1, ou monture, de fixation des verres, deux branches 2, respectivement référencées 2a et 2b, des premiers aimants 3, respectivement référencés 3a et 3b, des seconds aimants 4, respectivement référencés 4a et 4b, une boucle 5 de liaison des extrémités des deux branches et des connecteurs 6a et 6b entre la boucle 5 et les branches.

Le cadre 1 est muni, de part et d'autre, de renflements 1a et 1 b destinés à coopérer avec les branches. Les renflements 1a et 1 b sont fixement solidaires du reste du cadre 1, en étant par exemple venus de matière avec le reste du cadre.

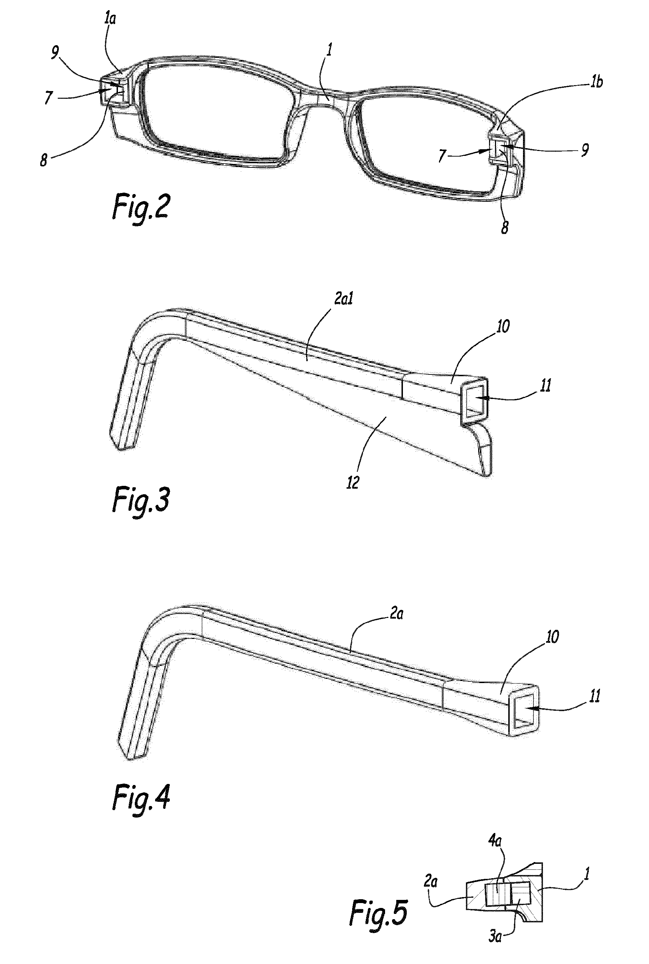

Sur la figure 2, on a représenté une vue du cadre 1 où l'on voit un logement 7, de part et d'autre du cadre, pratiqué dans chacun des renflements 1a et 1b. Chaque logement 7 est représenté en section carrée sur la figure, mais il pourrait être de section rectangulaire ou circulaire. On voit que le bord interne 8 du renflement 1a ou 1b délimite une rainure 9 sur laquelle une des branches 2 viendra en appui comme cela sera expliqué ci-après.

La figure 3 représente, sous la référence 2a1, un premier mode de réalisation de la branche 2a (ou 2b), comprenant à son extrémité un renflement 10, qui est fixement solidaire du reste de la branche, en étant par exemple venu de matière, et dans lequel est pratiqué un logement 11 ouvert, de section carrée. Cette section peut être rectangulaire ou circulaire. La branche 2a est prolongée à sa base par une nervure 12 en saillie par rapport au bord du logement 11. L'extrémité libre 13 de la nervure 12 est destinée à coopérer avec une découpe pratiquée dans le cadre 1 comme cela sera expliqué plus loin.

La figure 4 représente un second mode de réalisation de la branche 2a (ou 2b) selon lequel celle-ci est exempte de la nervure 12.

Les logements 7 du cadre 1 reçoivent respectivement les aimants 3a et 3b, avec une profondeur telle que l'aimant est complètement engagé dans celui-ci.

Le logement 11 de chaque branche 2a ou 2b reçoit un des aimants 4a et 4b et présente une profondeur telle que chaque aimant reste partiellement en saillie.

Ainsi, lors de la mise en place de chaque branche, l'aimant 4 correspondant vient en contact de l'aimant 3 correspondant, en étant partiellement engagé dans le logement 7 correspondant. Dans cette configuration, le bord libre de chaque logement 7 et 11 vient en contact intime. Cette structure permet un maintien ferme de chaque branche par rapport au cadre.

Lorsqu'on souhaite rabattre les branches 2 sur le cadre 1, il suffit de rabattre chaque branche sur le cadre. Durant ce mouvement, le bord interne de l'extrémité d'une branche prend appui dans la rainure 9 comme il sera expliqué plus en détail par la suite, les aimants 3 et 4 assurant toujours leur fonction de maintien des branches sur le cadre 1.

La coupe représentée sur la figure 5 montre la jonction entre la branche 2a avec le cadre 1. On voit que l'aimant 4a disposé dans le logement 11 de la branche 2a est légèrement en saillie par rapport à l'extrémité de la branche 2a. Par contre, l'aimant 3a, engagé dans le logement 7 correspondant, est complètement engagé dans celui-ci, laissant un espace libre dans lequel la partie saillante de l'aimant 4a vient s'engager. Cette structure permet d'assurer un positionnement correct de la branche et d'éviter tout déplacement, par calage relatif.

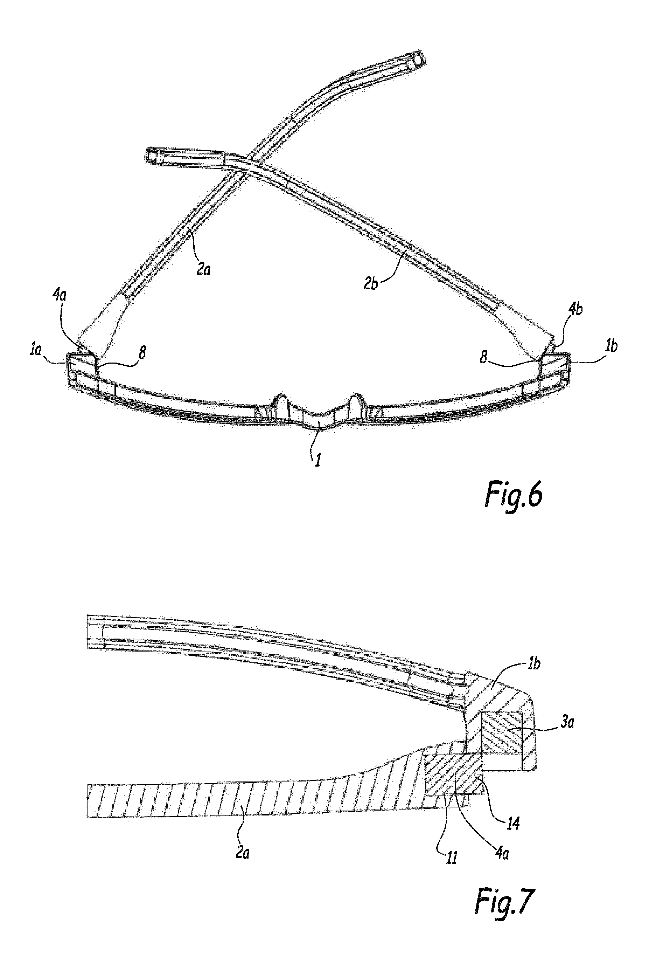

Sur la figure 6, on a représenté le repliement des branches 2a et 2b sur le cadre 1. Ce repliement s'effectue en rabattant chacune des branches, la force d'attraction des aimants maintenant la branche contre le renflement 1a ou 1 b. Sur la figure, on voit que le bord libre de chaque branche vient en appui contre le bord interne 8 de chaque renflement 1 a ou 1 b. Les deux branches sont alors maintenues sans déplacement relatif.

Sur la figure 7, on voit la position finale de la branche 2a par rapport au cadre. L'aimant 4a, engagé dans le logement 11, a sa partie saillante précitée, référencée 14 sur cette figure, qui reste en appui contre le renflement 1b.

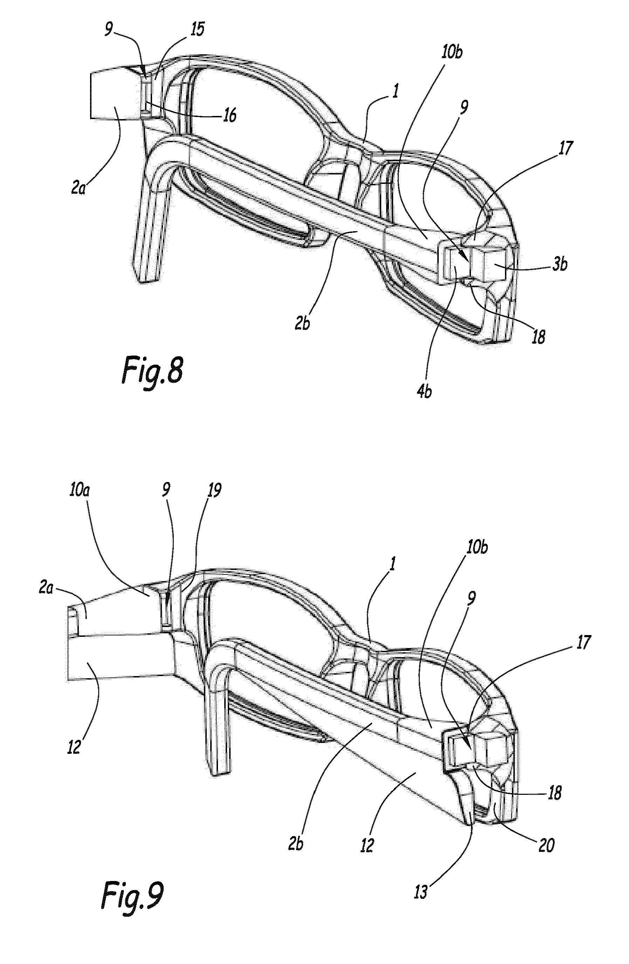

Sur la figure 8, on voit que le cadre 1 est muni d'un bloc 15 en saillie au niveau du bord latéral dudit cadre. Ce bloc 15 est sensiblement perpendiculaire audit bord latéral. Au niveau de l'angle intérieur de ce bloc 15, du côté du nez du cadre 1, la rainure 9 est pratiquée dans l'épaisseur du matériau constitutif. Lorsqu'on place la branche 2a de la lunette, le renflement 10 vient en appui contre le bloc 15 et l'aimant 4, intégré dans le renflement 10 de la branche 2a, vient s'engager dans la rainure 9. De ce fait, lors du repliement de la branche 2a, l'arête interne de l'aimant 4 et la rainure 9 constituent une articulation de la branche par rapport au cadre, en coopérant l'une avec l'autre par contact direct. Sur la partie droite dans le plan de la figure, on a réalisé une découpe du bord libre du cadre 1 permettant de visualiser des ergots 17 et 18 limitant la rainure 9.

Sur la figure 9, on voit que le cadre 1 est prolongé là encore par une paroi latérale 19, mais dont la largeur est sensiblement égale à celle du bord latéral du cadre 1. Cette paroi 19 est sensiblement perpendiculaire audit bord latéral. La rainure 9 est réalisée de manière identique au mode de réalisation de la figure 8, rainure qui est bordée par les ergots 17 et 18. Sur la figure, on voit que la largeur de la paroi 19 est prévue pour correspondre à celle du renflement 10 et de la nervure 12. Sur la figure, on voit encore que le bord libre du cadre 1 présente une découpe 20 dont la forme et la profondeur sont prévues pour recevoir l'extrémité 13 de la nervure. Ainsi, la branche 2 est maintenue de manière rigide et en appui constant sur la paroi 19, ce qui accroît encore le maintien de la branche. Lors du pivotement de la branche, celle-ci s'articule dans la rainure 9 et dans la découpe 20.

On comprend que les aimants 3, les aimants 4, les logements 7 du cadre 1 et les logements 11 des branches 2 forment ensemble des moyens, pratiques et efficaces, pour, à la fois, lier de manière articulée le cadre et les branches, en vue de passer ces dernières entre leur position repliée sur le cadre et leur position dépliée de port sur le visage d'un utilisateur, et maintenir ces branches vis-à-vis du cadre, tant lorsqu'elles sont en position dépliée que lorsqu'elles passent de cette position dépliée à leur position repliée, avantageusement dans cette position repliée y comprise.

## Revendications

1. Dispositif de jonction des branches (2) sur le cadre (1) d'une paire de lunettes, chaque branche (2) étant munie fixement, à son extrémité, d'un logement (11) de réception d'un premier aimant (4), tandis que le cadre (1) est muni fixement, de part et d'autre, d'un logement (7) de réception d'un second aimant (3),
**caractérisé en ce que** les premiers et seconds aimants (3, 4), le logement (11) de chaque branche (2) et les logements (7) du cadre (1) constituent des moyens de liaison articulée et de maintien des branches (2) sur le cadre (1), conçus pour que le premier aimant (4) de chaque branche est partiellement reçu dans un espace libre du logement correspondant (7) du cadre, en venant, lors du repliement de la branche sur le cadre, s'engager dans une rainure (9) du cadre de manière qu'une arête interne de ce premier aimant et cette rainure constituent une articulation de la branche par rapport au cadre.

2. Dispositif de jonction selon la revendication 1, **caractérisé en ce que** les aimants (3, 4) sont de forme cylindrique et les logements (7, 11) de forme tubulaire.

3. Dispositif de jonction selon la revendication 2, **caractérisé en ce que** les aimants (3, 4) et les logements (7, 11) sont de section carrée ou rectangulaire.

4. Dispositif de jonction selon la revendication 2, **caractérisé en ce que** les aimants (3, 4) et les logements (7, 11) sont de section circulaire.

5. Dispositif de jonction selon l'une quelconque des revendications précédentes, **caractérisé par** l'absence de charnière mécanique entre les branches (2) et le cadre (1).

6. Dispositif de jonction selon l'une quelconque des revendications précédentes, **caractérisé en ce que** les branches (2) sont maintenues en position repliée sur le cadre (1) par les aimants (3, 4).

7. Dispositif de jonction selon l'une quelconque des revendications précédentes, **caractérisé en ce que** le second aimant (3) est totalement introduit dans son logement correspondant (7).

8. Dispositif de jonction selon l'une quelconque des revendications précédentes, **caractérisé en ce que** le premier aimant (4) est partiellement en saillie par rapport à son logement correspondant (11).

9. Dispositif de jonction selon l'une quelconque des revendications précédentes, **caractérisé en ce que** le bord libre du cadre (1) est prolongé par une paroi latérale (15, 19), dans laquelle la rainure (9) est délimitée et sur laquelle la branche (2) vient en appui.

10. Dispositif de jonction selon la revendication 9, **caractérisé en ce que** la paroi latérale (15, 19) présente une largeur égale à la largeur de la branche (2).
